# EUROPEAN PATENT APPLICATION

(11) **EP 0 676 721 A2**
(43) Date of publication of application: **11.10.1995**
(21) Application number: 95102282.1
(22) Date of filing: 17.02.1995
(51) Int. Cl.: G06T 11/20, G09G 5/20

(54) **Styled vector generator**

(30) Priority: 06.04.1994 US 223627
(71) Applicant: HEWLETT-PACKARD COMPANY, Palo Alto, California 94304-1181 (US)
(72) Inventor: Mahoney, Lawrence G., Ft. Collins, CO 80525 (US); Bennett, Frank W., Ft. Collins, CO 80525 (US); Elliott, Ian A., Ft. Collins, CO 80526 (US)
(74) Representative: Schoppe, Fritz, Dipl.-Ing.

(57) **Abstract**

A styled vector generator (210) within a graphics controller device that works in parallel with a traditional solid vector generator (208) to create a repeating styled vector pattern. Before the pixels are transmitted to the frame buffer by the solid vector generator, the styled vector generator (210) paints each pixel in the pixel stream into either the foreground color (224) or the background color (222), depending on the pattern. The color for each pixel is determined by counting through the pixels in each segment (212, 214) of the pattern, moving from segment to segment. The pattern is defined by the lengths of individual segments, and the number of segments that make up the pattern. The styled vector generator also accepts an offset (304, 308) within the pattern to start rendering the pattern.

## Description

### FIELD OF THE INVENTION

This invention relates to computer systems and more particularly to graphics controllers within such computer systems. Even more particularly, the invention relates to a graphics controller for generating styled vectors.

### BACKGROUND OF THE INVENTION

Graphic images displayed on a screen of a work station, particularly when displaying images in computer aided design systems (CAD), are comprised primarily of lines. Most of the lines displayed are continuously drawn, called solid lines. Often, however, these systems display lines that are not continuous, for example, dashed lines. Any line drawn in such a system is called a vector, and a continuously drawn line is called a solid vector. Any line drawn that is not continuous is called a styled vector. Thus, a styled vector is a repeating pattern of line segments where each segment has a specified length in pixels, and where alternating line segments are rendered in alternating colors. These alternating colors are typically the foreground color and background color for the particular image being drawn.

High performance of a CAD system while drawing vectors, both solid vectors and styled vectors, is important for achieving high interactivity of the CAD system. Most graphic workstations have graphics controller devices with special circuits for accelerating the rendering, or drawing, of solid vectors by the CAD software executing on the workstation. These systems, however, treat styled vectors as a special case that is handled by the CAD software, thereby making their rendering slower than the rendering of solid vectors. Some prior art controller circuits have the ability to draw individual segments of a specified length, however, software is required to set up the hardware to draw each individual segment of the overall styled vector.

Another problem with styled vectors is that the drawing of the vector may need to start in the middle of a styled vector pattern, rather than at the beginning of the pattern. For example, when two styled vectors are being drawn such that the second vector starts at the end of the first vector, the pattern needs to be continuous across the two vectors. A discontinuous pattern is particularly noticeable when the second segment is drawn at an angle different from the angle of the first segment. When the pattern of the first segment does not end on an integral pattern boundary, the pattern of the second segment needs to pick up where the pattern of the first segment ended, so that the vector displays as a continuous pattern, thus requiring that the second styled vector be drawn starting in the middle of the pattern.

Another problem with drawing styled vectors is that different patterns can have a different number of segments and the segments can be of different lengths. Therefore, implementation within a vector generator of a graphics controller has been difficult, since the number of registers used to specify a pattern must be fixed at the time of manufacture of the controller device.

It is thus apparent that there is a need in the art for an improved method or apparatus which generates styled vectors without requiring a software subroutine for each segment. There is a further need for such a method of apparatus that can start drawing a styled vector at an arbitrary point within a pattern. A still further need is for such an apparatus or method that allows a pattern to have a varying number of segments with segments of varying lengths. The present invention meets these and other needs in the art.

### SUMMARY OF THE INVENTION

It is an aspect of the present invention to generate styled vectors for display on a graphical output device.

It is another aspect to generate such styled vectors using a group of segments, one segment for each part, or segment, of the pattern of the styled vector.

Another aspect is to generate such styled vectors having a variable number of pattern segments wherein each may have a different length.

A further aspect is to provide offset information to allow a styled vector start at an arbitrary point within a pattern.

The above and other aspects of the invention are accomplished in a styled vector generator within a graphics controller device that can autonomously generate complete styled vectors with no intervention from software, after the software initially sets up the pattern to be drawn by the styled vector generator. The styled vector generator works in parallel with a traditional solid vector generator contained within the graphics controller device. The solid vector generator produces the addresses in screen coordinates for the pixels that make up the vector, but before the pixels are transmitted to the frame buffer by the solid vector generator, the styled vector generator "paints" each pixel in the pixel stream into either the foreground color or the background color currently being used by the controller. The styled vector generator determines the correct color for each pixel by counting through the pixels in each segment, while moving from segment to segment within the defined styled vector pattern.

Before issuing a start command to the styled vector generator, software stores the predefined foreground and background colors, as well as storing the pattern for the styled vector. The styled vector pattern is defined by the lengths of the individual segments of the pattern, and the number of segments that make up the repeating pattern of the styled vector. In addition, the software defines to the hardware where within the pattern to start rendering the pattern. This is called the offset, and it comprises the segment number of the pattern, and the pixel count within the segment, where rendering is to start.

### BRIEF DESCRIPTION OF THE DRAWINGS

The above and other aspects, features, and advantages of the invention will be better understood by reading the following more particular description of the invention, presented in conjunction with the following drawings, wherein:
Fig. 1 shows a block diagram of a computer system incorporating the present invention;
Fig. 2 shows a block diagram of the graphics controller containing the present invention;
Fig. 3 shows a detailed block diagram of the styled vector generator of the present invention; and
Fig. 4 shows examples of styled vectors generated by the styled vector generator of the present invention.

### DESCRIPTION OF THE PREFERRED EMBODIMENT

The following description is of the best presently contemplated mode of carrying out the present invention. This description is not to be taken in a limiting sense but is made merely for the purpose of describing the general principles of the invention. The scope of the invention should be determined by referencing the appended claims.

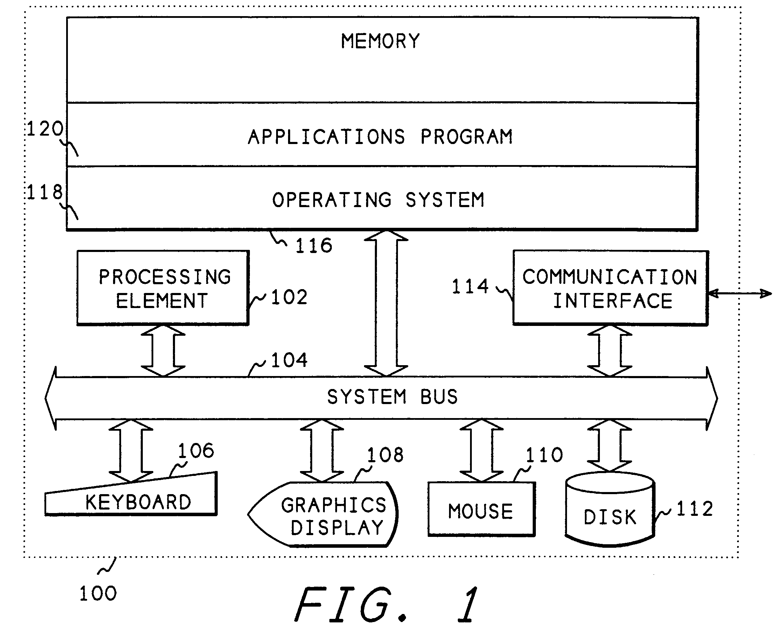

Fig. 1 shows a block diagram of a computer system containing the present invention. Referring now to Fig. 1, the computer system 100 contains a processing element 102 which communicates to other elements of the computer system 100 over a system bus 104. A keyboard 106 allows text input to the computer system 100 and a mouse 110 allows graphical locator input to the computer system 100. A graphics display 108 provides for graphics and text output to be viewed by a user of the computer system 100, and contains the styled vector generator of the present invention. A disk 112 stores an operating system and other user data of the computer system 100. A memory 116 contains an operating system 118, and an application program 120.

The present invention provides the capability for the graphics hardware within a graphics controller device to autonomously generate complete styled vectors with no intervention from the software, after the software initially sets up the hardware to draw the styled vector. Because the invention provides the same level of performance for drawing styled vectors as was previously available for drawing solid vectors, there is no performance penalty within a graphics application for using styled vectors instead of solid vectors.

The present invention works in parallel with the traditional solid vector generator contained within a graphics controller. The solid vector generator still produces the addresses in screen coordinates for the pixels that make up the vector. Before the pixels are transmitted to the frame buffer, the styled vector generator "paints" each pixel in the pixel stream into one of two predefined colors, either the foreground color or the background color currently being used in the controller. Therefore, the styled vector generator of the present invention need only determine whether the color for each pixel being drawn by the solid vector generator should be of the foreground or background color.

Prior to initiating the hardware drawing of the vector, the software must set up the predefined foreground and background colors, as well as specifying the pattern for the styled vector. The styled vector pattern is defined by storing the lengths of the individual segments of the pattern into pattern segment registers, and by storing the number of segments that make up the repeating pattern of the styled vector into a maximum segment register. In addition, the software defines to the hardware where within the pattern to start rendering the pattern. This is called the offset, and it requires storing the segment number of the pattern where rendering is to start in an initial segment register, as well as storing a pixel count within the segment where rendering is to start into an initial count register.

After setting the information into the hardware, the software issues a command to the solid vector generator to draw a styled vector. The styled vector generator determines the correct color for each pixel by counting through the pixels in each segment, and by moving from segment to segment within the defined styled vector pattern. Thus, the styled vector is generated with no intervention from the software, allowing the software to proceed with computation for the next graphic operation in parallel with the rendering of the styled vector.

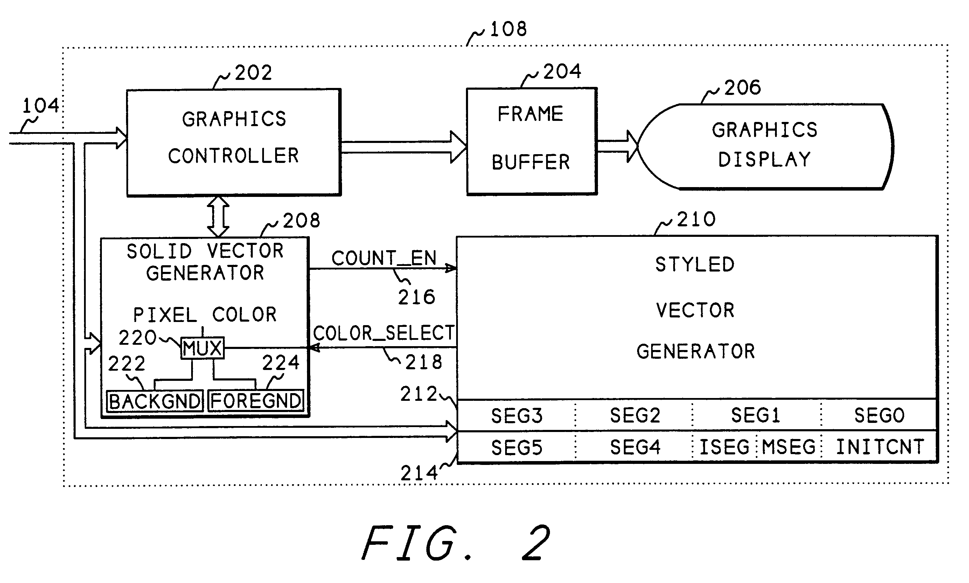

Fig. 2 shows a block diagram of a graphics display 108 of Fig. 1, which contains the present invention. Referring now to Fig. 2, the system bus 104 (Fig. 1) connects to the graphics controller 202 and to the solid vector generator 208 as well as the styled vector generator 210. This allows the applications program 120 (Fig. 1) to send commands to the graphics controller 202 as well as load data into registers within the solid vector generator 208 and within the styled vector generator 210. As discussed above, the application program 120 loads the background register 222 with the color to be used for the background of the styled vector, and it loads the foreground color to be used with the styled vector into foreground register 224. The applications program 120 also loads the styled vector pattern into registers 212 and 214, as will be discussed below. In addition, the applications program 120 can set, reset, or leave unchanged toggle latch 310 (described below), independent of registers 212 and 214. The state of toggle latch 310 determines whether the foreground or background color will be used.

Once the software has set up the vector generators, it sends a command to the graphics controller 202 which causes the solid vector generator 208 to start generating the vector. For each pixel of the vector being generated, the solid vector generator 208 sends a COUNT_EN signal 216 to the styled vector generator 210. The styled vector generator 210 then returns a COLOR_SELECT signal 218 which causes multiplexer 220 to select either the background register 222 containing the background color, or the foreground register 224 containing the foreground color to be sent as the pixel color into the frame buffer 204 and eventually to be displayed on the graphics display 206.

Styled vector registers 212 and 214 contain the information necessary to generate the styled vector pattern, except for the foreground and background colors which are stored in registers 224 and 222, respectively. The styled vector registers 212 and 214 contain segment count fields for styled vectors having up to six segments. Each segment (SEG) section of a styled vector register stores a count for part of the styled vector pattern. Each SEG count field, in the preferred embodiment, contains eight bits. This allows segment lengths to be up to 256 pixels. Those skilled in the art will recognize, however, that the SEG fields of the styled vector registers could be of any arbitrary length, thus allowing segments of the patterns to also be of any arbitrary length. Also, there could be an arbitrary number of SEG fields, allowing any arbitrary number of segments in a styled vector pattern.

The MSEG field indicates how many segments are contained in the current pattern, which allows the pattern to use less than all of the available six SEG fields. The initial SEG field (ISEG), and initial count (INITCNT) determine the initial offset in the styled vector pattern. The INITCNT field value counts down to one, thus a value of zero represents a count of 256. These register's contents can be read by the processor 102 over system bus 104, to provide for saving the state during a context switch.

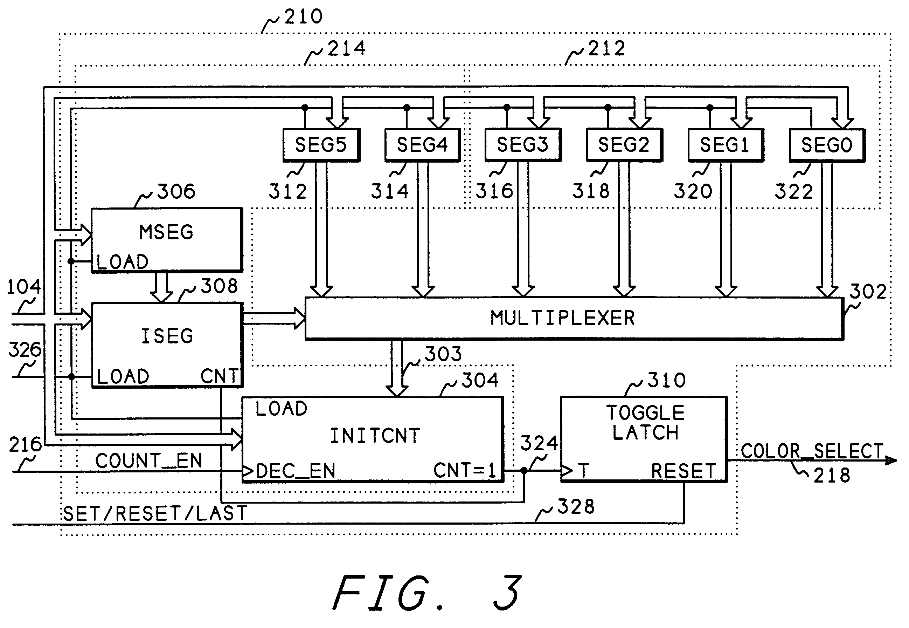

Fig. 3 shows a detailed block diagram of the styled vector generator of the present invention. Referring now to Fig. 3, system bus 104 is connected to the MSEG field register 306, the ISEG field register 308, the INITCNT field register 304, and each of the segment field registers 312-322 to allow these registers to be loaded by the applications program 120. Load signal 326 occurs when the application program 120 stores data into the styled vector registers 212 and 214.

The output of ISEG field register 308 is connected to a multiplexer 302 to select one of the SEG field registers 312 through 322. The output of multiplexer 302 is connected to the INITCNT field register 304 and when the count reaches one in the INITCNT field register 304, the register loads the data from the multiplexer bus 303, thus loading the data from one of the selected SEG field registers 312 through 322. The INITCNT field register 304 is decremented by the COUNT_EN signal 216 from the solid vector generator 208, as discussed above. Each time the INITCNT field register 304 reaches one, in addition to loading data from the multiplexer 302, it sends the CNT=1 signal 324 to toggle the toggle latch 310 to a binary value opposite of the binary value it had prior to receiving the signal 324. Thus, the toggle latch 310 produces the COLOR_SELECT signal 218 which is used to select the foreground or background color as discussed above.

The CNT=1 signal 324 also causes the ISEG field register 308 to increment by one. When the ISEG field register 308 reaches the value contained in the MSEG field register 306, the next CNT=1 signal 324 will cause the ISEG field register 308 to reset to a value of zero, rather than increment.

SET/RESET/LAST signal 328 allows the applications program 120 to establish the initial state of toggle latch 310.

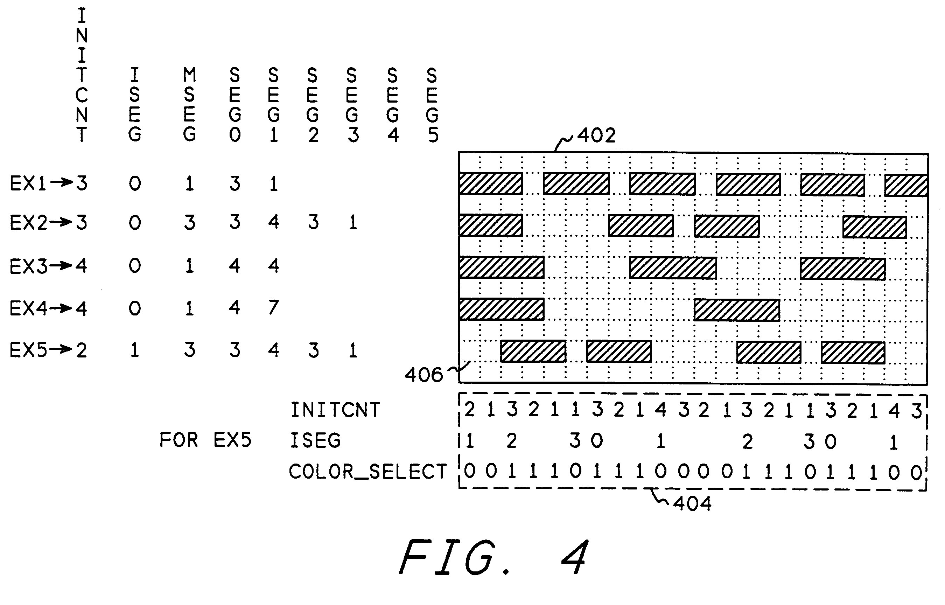

Fig. 4 shows five examples of the operation of the styled vector generator of the present invention. Each of these examples is shown by one of the lines EX1 through EX5 on the left side of the figure. Referring now to Fig. 4, contents of the field segment registers are shown on the left side of the figure, and the displayed pattern is shown in the area 402. Within the display area 402, the foreground color is shown as a diagonal hatched pattern, and the background color is shown as unhatched. The dotted lines separate individual pixels.

EX1 shows a simple pattern having three foreground pixels followed by one background pixel. Initially the INITCNT, ISEG, MSEG, SEG0, and SEG1 field registers are loaded with values of three, zero, one, three, and one respectively. This causes the styled vector generator to generate the pattern of pixels illustrated on the same line as the data for EX 1, but within the screen area 402. As shown, this pattern has three pixels of the foreground color, followed by one pixel of the background color, followed by three pixels of the foreground color, etc.

Data within area 404 shows the values for the INITCNT field register 304 and the ISEG field register 308 as the pattern for EX5 is created. EX5 creates the same pattern as example 2, however, the start of the pattern is offset to the left by five pixels. In EX5, the INITCNT field register 304 is loaded with an initial value of two, the ISEG field register 308 is loaded with an initial value of one, and toggle latch 310 is reset. This causes the first two pixels to be output as the background color, represented by the unhatched area 406, thus causing the pattern to be generated starting in the middle of the pattern, with the third pixel of the pattern from segment field register one. After the first and second pixels are output, the COUNT_EN signal 216 causes the INITCNT field register 304 to decrement to one, sending the CNT=1 signal 324. This causes the ISEG field register 308 to increment to a value of two and also causes a value of three from SEG field register two to be loaded into the INITCNT field register 304. The CNT=1 signal 324 also toggles the toggle latch 310, so that the next pixel output will be in the foreground color, indicated by the hatched area following the area 406. After the next three pixels are output in the foreground color, the COUNT_EN signal decrements the INITCNT field register 304 to one and sends the CNT=1 signal 324. This causes the ISEG field register 308 to increment three, and also causes a value of one from SEG field register three to be loaded into the INITCNT field register 304. After one pixel is output in the background color, the CNT=1 signal is sent, which causes the ISEG field register to increment beyond the value contained in the MSEG register 306 thus causing the ISEG field register 308 to reset to a value of zero. This causes the value from SEG field register zero to be loaded through multiplexer 302 into the INITCNT field register 304. The CNT=1 signal 324 also toggles the toggle latch 310 which causes the next pixel to be output in the foreground color. Three more COUNT_EN signals 216 causes the INITCNT field register 304 to again decrement to one and send the CNT=1 signal 324. This increments the ISEG register 308 to a value of one which loads the SEG1 field register 320 value into the INITCNT field register 304, and toggles the toggle latch 310 to cause the pixel to be output in the background color. Four more pixels are output and then the CNT=1 signal is sent, which causes the ISEG field register 308 to increment to a value of two and loads a value of three into the INITCNT field register 304 from SEG2 field register 318. The next three COUNT_EN clock signals decrement the INITCNT field register 304 while continuing to output the foreground color as the pattern. This operation continues until the end of the pattern which is defined by the end of the vector from the solid vector generator 208.

Those skilled in the art will recognize that the toggle latch 310 could be a counter and there could be a number of color registers, instead of just foreground and background color registers. With this configuration, the toggle counter would increment or decrement each time the CNT=1 signal 324 is received. The output of the counter could be used to select one of the color registers, to allow the system to output a pattern using many different colors.

Having thus described a presently preferred embodiment of the present invention, it will now be appreciated that the aspects of the invention have been fully achieved, and it will be understood by those skilled in the art that many changes in construction and circuitry and widely differing embodiments and applications of the invention will suggest themselves without departing from the spirit and scope of the present invention. The disclosures and the description herein are intended to be illustrative and are not in any sense limiting of the invention, more preferably defined in scope by the following claims.

## Claims

1. A styled vector generator for generating a styled vector for output to a graphical output device, said styled vector generator comprising:
a plurality of pattern segment registers (212, 214), each for storing a count of a portion of pixels of said styled vector, wherein said plurality of pattern segment registers are sequentially numbered;
at least two color registers (222, 224), each containing a value representing a color for a portion of said pixels of said styled vector, wherein said color registers are sequentially numbered; and
logic circuit means (302, 304, 306, 308), connected to said plurality of pattern segment registers and connected to said at least two color registers (222, 224), for sequentially accessing each of said plurality of pattern segment registers to retrieve said count contained in an accessed register as a segment count, for outputting a number of pixels of said styled vector equal to said segment count, and for repeating said sequentially accessing and outputting until said styled vector is completely generated, wherein said pixels are output as a color value from a selected one of said at least two color registers, and wherein said color registers are selected by sequentially accessing a next of said at least two color registers each time a new pattern segment register is accessed, wherein after a last of said color registers is accessed, said accessing said color registers continues with accessing a first of said color registers.

2. The styled vector generator of claim 1 further comprising:
a segment limit register (306) connected to said logic circuit means; and
limit means (308) within said logic circuit means for causing said logic circuit means to sequentially access said plurality of pattern segment registers up to a pattern segment register number equal to a value in said segment limit register, and thereupon to start said repeating.

3. The styled vector generator of claim 1 further comprising:
an initial segment register (308); and
means within said logic circuit means for causing said sequentially accessing each of said plurality of pattern segment registers to start sequentially accessing at a register number equal to a value in said initial segment register, but upon starting said repeating, to start said sequentially accessing at a first of said plurality of pattern segment registers.

4. The styled vector generator of claim 3 further comprising:
an initial count register (304); and
means within said logic circuit means for outputting a number of pixels of said vector equal to a value in said initial count register before starting said sequentially accessing each of said plurality of pattern segment registers.

5. The styled vector generator of claim 1 further comprising:
an initial count register (304); and
means within said logic circuit means for outputting a number of pixels of said vector equal to a value in said initial count register before starting said sequentially accessing each of said plurality of pattern segment registers.

6. A vector generator for generating a patterned vector for output to a graphical output device, said vector generator comprising:
a plurality of pattern segment registers (212, 214), each for storing a count of a portion of pixels of said patterned vector, wherein said plurality of pattern segment registers are sequentially numbered;
at least two color registers (222, 224), each containing a value representing a color for a portion of said pixels of said styled vector, wherein said color registers are sequentially numbered;
a segment limit register (306) for storing a number of a highest of said plurality of segment registers to be used in generating said patterned vector; and
logic circuit means (302, 304, 308), connected to said plurality of pattern segment registers, connected to said at least two color registers, and connected to said segment limit register, for sequentially accessing each of said plurality of pattern segment registers, up to a pattern segment register number equal to a value in said segment limit register, to retrieve said count contained in an accessed register as a segment count, for outputting a number of pixels of said vector equal to said segment count, and for repeating said sequentially accessing and outputting until said patterned vector is completely generated, wherein said pixels are output as a color value from a selected one of said at least two color registers, and wherein said color registers are selected by sequentially accessing a next of said at least two color registers each time a new pattern segment register is accessed, wherein after a last of said color registers is accessed, said accessing said color registers continues with accessing a first of said color registers.

7. The vector generator of claim 6 further comprising:
an initial segment register (308); and
means within said logic circuit means for causing said sequentially accessing each of said plurality of pattern segment registers to start sequentially accessing at a register number equal to a value in said initial segment register, but upon starting said repeating, to start said sequentially accessing at a first of said plurality of pattern registers.

8. The vector generator of claim 7 further comprising:
an initial count register (304); and
means within said logic circuit means for outputting a number of pixels of said vector equal to a value in said initial count register before starting said sequentially accessing each of said plurality of pattern segment registers.

9. The vector generator of claim 6 further comprising:
an initial count register (304); and
means within said logic circuit means for outputting a number of pixels of said vector equal to a value in said initial count register before starting said sequentially accessing each of said plurality of pattern segment registers.
